# EUROPÄISCHE PATENTANMELDUNG

(11) **EP 4 656 278 A1**
(43) Veröffentlichungstag der Anmeldung: **03.12.2025**
(21) Anmeldenummer: 25171586.8
(22) Anmeldetag: 22.04.2025
(51) Int. Cl.: B01D 63/08, B01D 65/00, B01D 69/00, H01M 8/04119

(54) **MEMBRANBEFEUCHTER**

(30) Priorität: 17.05.2024 DE 102024113868
(71) Anmelder: Carl Freudenberg KG, 69469 Weinheim (DE)
(72) Erfinder: WUNSCH, Estefano, 81825 München (DE); REUL, Maximilian Mathias, 81739 München (DE)

(57) **Zusammenfassung**

Membranbefeuchter, umfassend ein Gehäuse (1) mit einem Einbauraum (2), der durch eine Einschuböffnung (3) zugänglich ist und eine im Wesentlichen kastenförmige Membraneinheit (4), die auswechselbar im Einbauraum (2) angeordnet ist, wobei das Gehäuse (1) zumindest zwei Gehäuseteile (1.1, 1.2) umfasst, die gemeinsam den Einbauraum (2) begrenzen und zerstörungsfrei lösbar miteinander verbunden sind, wobei das Gehäuse (1) und die Membraneinheit (4) von zwei ersten und zweiten Luftströmen (L1, L2) durchströmbar sind und wobei das Gehäuse (1) für die Luftströme (L1, L2) jeweils einen Strömungseinlass (5, 6) und jeweils einen Strömungsauslass (7, 8) aufweist. Die Luftströme (L1, L2) sind im Wesentlichen senkrecht zueinander angeordnet, wobei die Membraneinheit (4) eine Montagerichtung (9) in den Einbauraum (2) aufweist, die sich parallel zum ersten Luftstrom (L1) erstreckt, wobei nur der erste Luftstrom (L1) durch zumindest eine Dichtung (10) aus einem gummielastischen Dichtungswerkstoff aktiv im Gehäuse (1) abgedichtet ist und wobei der zweite Luftstrom (L2) durch einen strömungsdurchlässigen Bypass (11) zwischen Gehäuse (1) und Membraneinheit (4) passiv abgedichtet ist.

## Beschreibung

### Technisches Gebiet

Die Erfindung betrifft einen Membranbefeuchter, umfassend ein Gehäuse mit einem Einbauraum, der durch eine Einschuböffnung zugänglich ist und eine im Wesentlichen kastenförmige Membraneinheit, die auswechselbar im Einbauraum angeordnet ist, wobei das Gehäuse zumindest zwei Gehäuseteile umfasst, die gemeinsam den Einbauraum begrenzen und zerstörungsfrei lösbar miteinander verbunden sind, wobei das Gehäuse und die Membraneinheit von zwei ersten und zweiten Luftströmen durchströmbar sind und wobei das Gehäuse für die Luftströme jeweils einen Strömungseinlass und jeweils einen Strömungsauslass aufweist.

### Stand der Technik

Ein solcher Membranbefeuchter ist beispielsweise aus der DE 10 2020 208 046 A1 bekannt. Das Gehäuse und die Membraneinheit sind nach dem Gegenstromprinzip oder nach dem Gleichstromprinzip durchströmbar. Die Membraneinheit ist im Bereich ihrer Ecken mittels einer einteiligen, gehärteten Klebstoffmasse stoffschlüssig und unlösbar mit dem Gehäuse verbunden.

Die durch die Klebstoffmasse in das Gehäuse eingegossene Membraneinheit kann in einem möglichen Reparaturfall nicht zerstörungsfrei aus dem Gehäuse gelöst und deshalb nicht durch eine neue Membraneinheit ersetzt werden.

Ein weiterer Membranbefeuchter ist aus der WO 2007/020107 A1 bekannt. Dieser Membranbefeuchter umfasst ein Gehäuse zur Aufnahme einer Membraneinheit, wobei das Gehäuse durch Gehäusedeckel verschließbar ist. Das Gehäuse und die Membraneinheit sind an allen vier Seiten durch aktive Dichtelemente gegeneinander abgedichtet.

Um eine spannungsfreie Einbindung der Membraneinheit in das Gehäuse zu erreichen, liegt die Membraneinheit an einem ersten Dichtelement axial und/ oder radial gleitbeweglich an. Dabei liegt das Dichtelement einerseits dichtend am Außenumfang der Membraneinheit an, und andererseits ist die Anpressung des Dichtelements an die Membraneinheit so gewählt, dass die Membraneinheit bei hoher Dichtheit in axialer Richtung beweglich ist und damit eine Loslagerdichtung bildet, um beispielsweise Wärmedehnungen oder Toleranzen ausgleichen zu können.

Dadurch, dass alle Seiten der Membraneinheit gegenüber dem Gehäuse durch aktive Dichtelemente abgedichtet sind, ist die Montage des Membranbefeuchters aufwendig. Bei der Montage der Membraneinheit in das Gehäuse muss darauf geachtet werden, dass die an allen vier Seiten vorgesehenen Dichtelemente nicht beschädigt, insbesondere nicht abgeschert werden.

Anschließend ist die Membraneinheit, ebenso, wie bei dem eingangs beschriebenen Membranbefeuchter aus der DE 10 2020 208 046 A1, hermetisch dicht innerhalb des Gehäuses angeordnet.

### Darstellung der Erfindung

Der Erfindung liegt die Aufgabe zugrunde, einen Membranbefeuchter der eingangs genannten Art derart weiterzuentwickeln, dass er einfach und kostengünstig herstellbar ist, insbesondere dass der Membranbefeuchter prozesssicher montierbar ist.

Außerdem soll die gebrauchte Membraneinheit bedarfsweise einfach aus dem Gehäuse herausnehmbar und durch eine neue Membraneinheit zu ersetzen sein.

Diese Aufgabe wird erfindungsgemäß mit den Merkmalen von Anspruch 1 gelöst. Auf vorteilhafte Ausgestaltungen nehmen die auf Anspruch 1 direkt oder indirekt rückbezogenen Ansprüche Bezug.

Zur Lösung der Aufgabe ist es vorgesehen, dass die Luftströme im Wesentlichen senkrecht zueinander angeordnet sind, dass die Membraneinheit eine Montagerichtung in den Einbauraum aufweist, die sich parallel zum ersten Luftstrom erstreckt, dass nur der erste Luftstrom durch zumindest eine Dichtung aus einem gummielastischen Dichtungswerkstoff aktiv im Gehäuse abgedichtet ist und dass der zweite Luftstrom durch einen strömungsdurchlässigen Bypass zwischen Gehäuse und Membraneinheit passiv abgedichtet ist.

Hierbei ist von Vorteil, dass der Membranbefeuchter einfach und kostengünstig herstellbar ist. Der Membranbefeuchter weist einen teilearmen Aufbau auf, dadurch, dass nur der erste Luftstrom durch die zumindest eine aktive Dichtung gegenüber dem Gehäuse abgedichtet ist.

Der zweite Luftstrom wird demgegenüber nicht durch eine aktive Dichtung im Gehäuse abgedichtet. Der zweite Luftstrom wird passiv dadurch abgedichtet, dass das Gehäuse und die Membraneinheit einen Bypass begrenzen, der bewusst strömungsdurchlässig und dadurch nicht hermetisch dicht ausgelegt ist.

Durch diese Ausgestaltung weist der Membranbefeuchter zusätzlich besonders kompakte Abmessungen auf, da sich durch den zuvor beschriebenen integrierten Bypass Räume innerhalb des Membranbefeuchters effizient nutzen lassen, weil der Bypass, im Gegensatz zu einer aktiven Dichtung, beispielsweise einem O-Ring, kein extra Volumen benötigt.

Zur Funktion des Membranbefeuchters wird folgendes ausgeführt:
Bei L1 handelt es sich um den trockenen Luftstrom, bei L2 demgegenüber um den feuchten Luftstrom.

Durch die wasserdampfdurchlässige Membraneinheit findet aufgrund der unterschiedlichen Wassergehalte eine Übertragung von Luftstrom L2 zu Luftstrom L1 statt. Um eine ausreichende Wasserübertragungsmenge sicherzustellen, werden mehrere Membranflächen gleichzeitig genutzt, wodurch sich die Größe der Membraneinheit ergibt. Der Membranbefeuchter kann als Hohlfaser-Membranbefeuchter oder als Flachmembranbefeuchter ausgebildet sein. Der Bypass wird anteilig vom feuchten Luftstrom L2 durchströmt. Dieser Anteil kommt nicht mit trockenen Luftstrom L1 in Kontakt. Der Bypass strömt zwischen Membraneinheit und Gehäuse entlang des Umfangs der Membraneinheit zum Strömungsauslass von Luftstrom L2 und vermischt sich am Strömungsauslass von Luftstrom L2 mit dem ausströmenden feuchten Luftstrom aus der Membraneinheit.

Die enthaltene Wassermenge des feuchten Luftstroms L2, welche zum Beispiel aus einer Brennstoffzelle kommt, ist größer als zur Befeuchtung des trockenen Luftstroms L1 notwendig, da in der Brennstoffzelle durch die chemische Reaktion Wasser erzeugt wird. Dadurch ist es technisch notwendig einen Teil des feuchten Luftstroms L2 an dem Befeuchter als Bypass vorbeizuführen.

Dadurch verringert man die Durchströmgeschwindigkeit durch die Membraneinheit und der Druckverlust verringert sich. Weiterhin erhöht sich die Stoffübertragungseffizienz der Memebraneinheit, da sich das chemische Gleichgewicht durch die erhöhte Verweilzeit besser einstellen kann.

Wenn Luftstrom L2 hermetisch abgedichtet wäre, dann wäre entweder ein externes Bauteil notwendig, wodurch mehr Bauteile/ Bauraum notwendig wären (erhöhte Komplexität). Oder man müsste die zuvor genannten Nachteile (erhöhter Druckverlust, niedrigere Stoffübertragungseffizienz) in Kauf nehmen.

Dadurch, dass die Luftströme im Wesentlichen senkrecht zueinander angeordnet sind und nur der erste Luftstrom durch die zumindest eine Dichtung aktiv abgedichtet ist, ist von Vorteil, dass die Membraneinheit durch die Einschuböffnung in den Einbauraum des Gehäuses montiert werden kann, ohne dass eine andere aktive Dichtung aus einem gummielastischen Dichtungswerkstoff für den zweiten Luftstrom während der Montage beschädigt/ zerstört würde.

Dadurch, dass keine weitere aktive Dichtung zur Abdichtung des zweiten Luftstroms vorgesehen ist, sondern nur der strömungsdurchlässige Bypass, kann während der Montage auch keine weitere Dichtung abgeschert werden.

Die Begrenzungswand und die Membraneinheit weisen bevorzugt jeweils zumindest ein im Wesentlichen kongruent ausgebildetes Labyrinth-Profil auf, wobei die Labyrinth-Profile strömungsleitend miteinander in Eingriff sind. In Abhängigkeit von der Ausgestaltung der Labyrinth-Profile kann der Volumenstrom durch den Bypass eingestellt werden. Der Volumenstrom wird passiv durch die Geometrie der Labyrinth-Profile bestimmt.

Die Labyrinth-Profile können jeweils eine in Richtung des ersten Luftstroms ausgebildete Längserstreckung aufweisen, wobei die Labyrinth-Profile als ineinandergreifende Nut-Steg-Profile ausgebildet sind, zur Führung der Membraneinheit bei Montage in den Einbauraum. Die Labyrinth-Profile sorgen also nicht nur für eine passive Abdichtung des Luftstroms L2 sondern außerdem dafür, dass die Membraneinheit gut geführt und damit wie eine Schublade verkantungsfrei in den Einbauraum montiert werden kann.

Für die meisten Anwendungsfälle hat es sich als vorteilhaft bewährt, wenn die Labyrinth-Profile während der bestimmungsgemäßen Verwendung des Membranbefeuchters von einem Volumenstrom durchströmbar sind, der 1 bis 300 g/s beträgt, gemessen nach DIN EN 24006.

Die Gehäuseteile können auf ihren einander zugewandten Seiten jeweils einen Gehäuseflansch aufweisen. Die Gehäuseteile liegen während der bestimmungsgemäßen Verwendung des Membranbefeuchters dichtend aneinander an und sind durch Befestigungselemente, beispielsweise Schrauben, zerstörungsfrei lösbar miteinander verbunden.

Zur Abdichtung der Gehäuseflansche gegeneinander und zur Abdichtung des Luftstroms L1 kann es vorgesehen sein, dass einer der Gehäuseflansche eine Dichtungsnut aufweist und einer der Gehäuseflansche eine Dichtfläche, wobei die Dichtung in der Dichtungsnut und zwischen den Gehäuseflanschen unter elastischer Vorspannung dichtend angeordnet sind. Die Dichtung kann beispielsweise durch einen Dichtring gebildet sein, der innerhalb der Dichtungsnut angeordnet ist. Der Dichtring kann als O-Ring ausgebildet sein oder einen davon abweichenden Querschnitt aufweisen, je nach Anwendungsfall.

Gemäß einer vorteilhaften Ausgestaltung kann es vorgesehen sein, dass die Dichtung ungehaftet und zerstörungsfrei lösbar in der Dichtungsnut angeordnet ist. Hierbei ist von Vorteil, dass der Membranbefeuchter im Anschluss an seine bestimmungsgemäße Verwendung sortenrein recyclebar ist. Außerdem sind Dichtungen in vielen unterschiedlichen Spezifikationen oftmals kostengünstig verfügbar, so dass der Membranbefeuchter insgesamt einfach und kostengünstig herstellbar ist.

### Kurzbeschreibung der Zeichnung

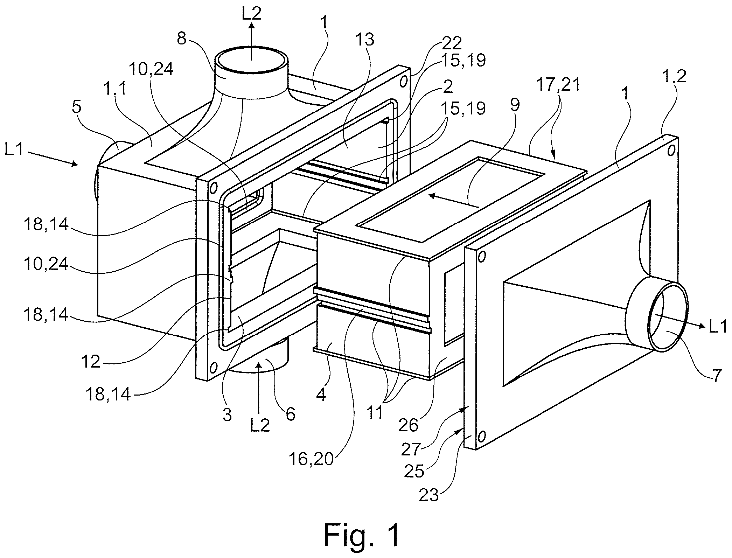

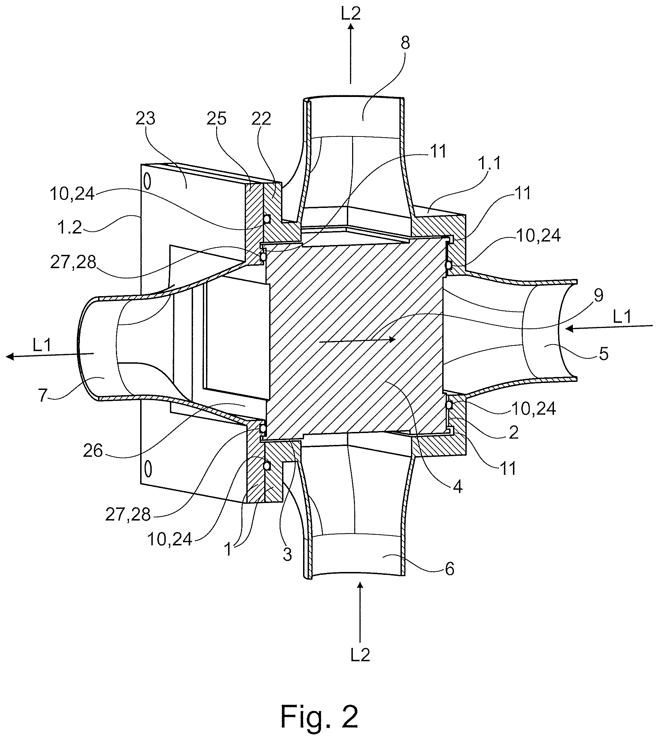

Ein Ausführungsbeispiel des erfindungsgemäßen Membranbefeuchters wird nachfolgend anhand der Figuren 1 und 2 näher beschrieben.

Diese zeigen jeweils in schematischer Darstellung:
- Figur 1: eine perspektivische Darstellung eines ersten Ausführungsbeispiels eines Membranbefeuchters als Explosions-Darstellung,
- Figur 2: einen Schnitt durch den montierten Membranbefeuchter aus Figur 1,
- Figur 3: ein zweites Ausführungsbeispiel eines Membranbefeuchters als Explosion-Darstellung in einer perspektivischen Darstellung von rechts,
- Figur 4: das zweite Ausführungsbeispiel aus Figur 3 in einer perspektivischen Darstellung von links.

### Ausführung der Erfindung

In Figur 1 ist ein Membranbefeuchter für eine Brennstoffzelle gezeigt.

Für eine Optimierung der Leistung der Brennstoffzelle ist eine gute Befeuchtung der Membran durch den Membranbefeuchter von entscheidender Bedeutung. In einem Membranbefeuchter werden der feuchte Abgasstrom aus der Brennstoffzelle und der trockene Frischluftstrom über die Membran miteinander in Kontakt gebracht.

Im dargestellten Ausführungsbeispiel sind die Luftströme L1, L2 senkrecht zueinander angeordnet.

In diesem Ausführungsbeispiel hat der trockene Luftstrom L1 einen Strömungseinlass 5 und einen Strömungauslass 7, der feuchte Luftstrom L2 einen Strömungeinlass 6 und einen Strömungauslass 8.

Durch die wasserdampfdurchlässige Membraneinheit 4 findet aufgrund der unterschiedlichen Wassergehalte eine Übertragung von Luftstrom L2 zu Luftstrom L1 statt. Um eine ausreichende Wasserübertragungsmenge sicherzustellen, werden mehrere Membranflächen gleichzeitig genutzt, wodurch sich die Größe der Membraneinheit 4 ergibt.

Der Bypass 11 wird anteilig vom feuchten Luftstrom L2 durchströmt. Dieser Anteil kommt nicht mit trockenen Luftstrom L1 in Kontakt. Der Bypass 11 strömt zwischen Membraneinheit 4 und Gehäuse 1, 1.1, 1.2 entlang des Umfangs der Membraneinheit 4 zum Strömungsauslass 8 von Luftstrom L2 und vermischt sich am Strömungsauslass 8 von Luftstrom L2 mit dem ausströmenden feuchten Luftstrom L2 aus der Membraneinheit 4.

Die enthaltene Wassermenge des feuchten Luftstroms L2, welche zum Beispiel aus einer Brennstoffzelle kommt, ist größer als zur Befeuchtung des trockenen Luftstroms L1 notwendig, da in der Brennstoffzelle durch die chemische Reaktion Wasser erzeugt wird. Dadurch ist es technisch notwendig einen Teil des feuchten Luftstroms L2 an dem Befeuchter als Bypass 11 vorbeizuführen. Dadurch verringert man die Durchströmgeschwindigkeit durch die Membraneinheit 4 und der Druckverlust verringert sich. Weiterhin erhöht sich die Stoffübertragungseffizienz der Memebraneinheit 4, da sich das chemische Gleichgewicht durch die erhöhte Verweilzeit besser einstellen kann.

Wie in Figur 1 zu erkennen, umfasst der Membranbefeuchter das Gehäuse 1 mit den beiden Gehäuseteilen 1.1, 1.2, wobei das Gehäuseteil 1.2 durch einen Gehäusedeckel gebildet ist, der den Einbauraum 2, in dem die Membraneinheit 4 angeordnet ist, dichtend verschließt.

Das Gehäuseteil 1.2 und das Gehäuseteil 1.1 mit der Membraneinheit 4 und damit der Luftstrom L1 sind durch Dichtungen abgedichtet.

Die Dichtung 10 besteht aus einem gummielastischen Dichtungswerkstoff und dichtet die Gehäuseflansche 22, 23 aktiv gegeneinander ab. Die Dichtung 10 ist in der Dichtungsnut 24 angeordnet und während der bestimmungsgemäßen Verwendung unter elastischer Vorspannung dichtend verpresst. Die beiden Gehäuseteile 1.1, 1.2 sind miteinander verschraubt und daher zur Montage/ Demontage der Membraneinheit 4 in den/ aus dem Einbauraum 2 des Gehäuseteils 1.1 zerstörungsfrei voneinander lösbar.

Der zweite Luftstrom L2 wird demgegenüber durch den strömungsdurchlässigen Bypass 11 zwischen Gehäuse 1 und Membraneinheit 4 passiv abgedichtet. Die passive Abdichtung mittels des Bypasses 11 erfolgt im Einbauraum 2 durch die Begrenzungswände 12, 13 und die Membraneinheit 4. Die Begrenzungswände 12, 13 und die Membraneinheit 4 weisen jeweils Labyrinth-Profile 14, 15, 16, 17 auf, die strömungsleitend miteinander in Eingriff sind. Durch diese Labyrinth-Profile 14, 15, 16, 17 wird nicht nur die zuvor beschriebene passive Abdichtung des Luftstroms L2 bewirkt, sondern außerdem eine gute Führung/ Positionierung der Membraneinheit 4 im Einbauraum 2. Die Labyrinth-Profile 14, 15, 16, 17 sind durch Nut-Steg-Profile 18, 19, 20, 21 gebildet.

Zur Montage des Membranbefeuchters wird zunächst die Dichtung 10 in die Dichtungsnut 24 des Gehäuseflanschs 22 des ersten Gehäuseteils 1.1 eingelegt.

Anschließend wird die blockförmige Membraneinheit 4 in Montagerichtung 9 durch die Einschuböffnung 3 in den Einbauraum 2 des Gehäuses 1 eingeschoben. Dabei werden die als Nut-Steg-Profile 18, 19, 20, 21 ausgebildeten Labyrinthprofile 14, 15, 16, 17 miteinander in Eingriff gebracht, ebenso wie weitere Führungsvorsprünge 26, 27, die sich parallel zu den Nut-Steg-Profilen 18, 19, 20, 21 an der Oberseite der Membraneinheit 4 erstrecken. Diese weiteren Führungsvorsprünge 26, 27 werden während der Montage der Membraneinheit 4 in den Einbauraum 2 jeweils in eine weitere Führungsnut 28, 29 eingeschoben, wobei sich jede Führungsnut 28, 29 in der entsprechenden Begrenzungswand 12, 13 des Einbauraums 2 parallel zur Montagerichtung 9 erstreckt.

Dadurch, dass die Labyrinthprofile 14, 15, 16, 17 in der Höhe im Wesentlichen mittig der Membraneinheit 4 angeordnet sind, die weiteren Führungsvorsprünge 26, 27 und die entsprechenden Führungsnuten 28, 29 jedoch im Abstand davon an der Oberseite der Membraneinheit 4, ist die Gefahr einer Verkantung bei der Montage der Membraneinheit 4 in den Einbauraum 2 des Gehäuses 1 auf ein Minimum begrenzt. Das Gehäuse 1 und die Membraneinheit 4 sind während ihrer Montage durch die Nut-Steg-Profile 18, 19, 20, 21 und die weiteren Führungsvorsprünge 26, 27 zusammen mit ihren entsprechenden weiteren Führungsnuten 28, 29 exakt zueinander ausgerichtet.

Bezugszeichen 26 bezeichnet eine Dichtfläche an der Membraneinheit 4, Bezugszeichen 27 eine Dichtung am Gehäuseteilen 1.2 und Bezugszeichen 28 eine Dichtungsnut am Gehäuseteilen 1.2.

Figur 2 zeigt einen Schnitt durch den montierten Membranbefeuchter aus Figur 1.

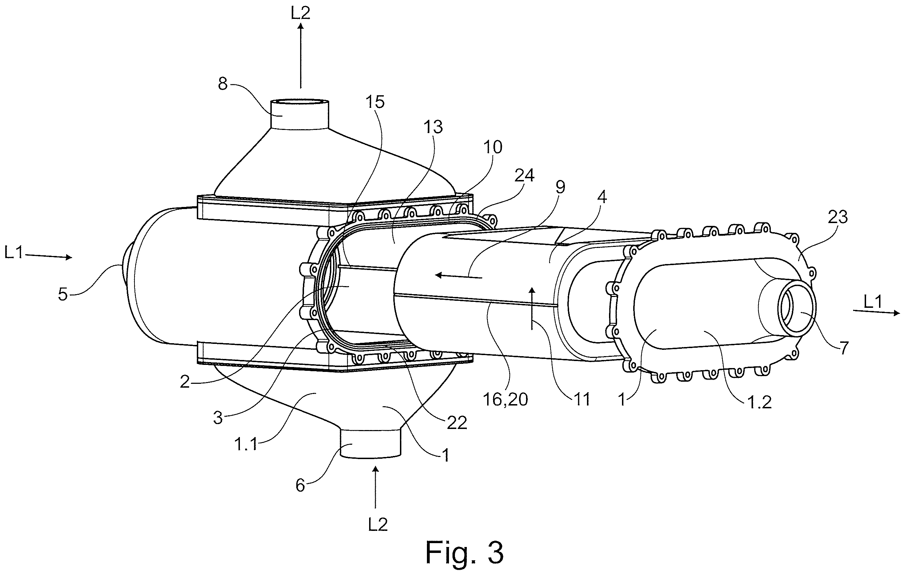

In Figur 3 ist ein weiteres Ausführungsbeispiel eines Membranbefeuchters gezeigt, das sich vom ersten Ausführungsbeispiel gemäß Figur 1 hauptsächlich dadurch unterscheidet, dass die Membraneinheit 4 nicht blockförmig, sondern im Wesentlichen oval ausgebildet ist. Der Membranbefeuchter ist als Explosions-Darstellung in einer perspektivischen Darstellung von rechts gezeigt.

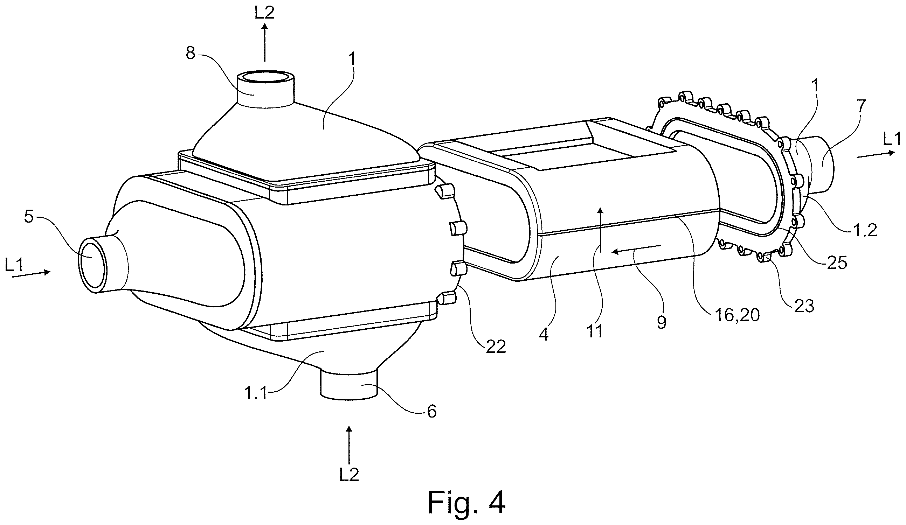

In Figur 4 ist das zweite Ausführungsbeispiel aus Figur 3 in einer perspektivischen Darstellung von links gezeigt.

## Patentansprüche

1. Membranbefeuchter, umfassend ein Gehäuse (1) mit einem Einbauraum (2), der durch eine Einschuböffnung (3) zugänglich ist und eine im Wesentlichen kastenförmige Membraneinheit (4), die auswechselbar im Einbauraum (2) angeordnet ist, wobei das Gehäuse (1) zumindest zwei Gehäuseteile (1.1, 1.2) umfasst, die gemeinsam den Einbauraum (2) begrenzen und zerstörungsfrei lösbar miteinander verbunden sind, wobei das Gehäuse (1) und die Membraneinheit (4) von zwei ersten und zweiten Luftströmen (L1, L2) durchströmbar sind und wobei das Gehäuse (1) für die Luftströme (L1, L2) jeweils einen Strömungseinlass (5, 6) und jeweils einen Strömungsauslass (7, 8) aufweist, **dadurch gekennzeichnet, dass** die Luftströme (L1, L2) im Wesentlichen senkrecht zueinander angeordnet sind, dass die Membraneinheit (4) eine Montagerichtung (9) in den Einbauraum (2) aufweist, die sich parallel zum ersten Luftstrom (L1) erstreckt, dass nur der erste Luftstrom (L1) durch zumindest eine Dichtung (10) aus einem gummielastischen Dichtungswerkstoff aktiv im Gehäuse (1) abgedichtet ist und dass der zweite Luftstrom (L2) durch einen strömungsdurchlässigen Bypass (11) zwischen Gehäuse (1) und Membraneinheit (4) passiv abgedichtet ist.

2. Membranbefeuchter nach Anspruch 1, **dadurch gekennzeichnet, dass** der Bypass (11) durch zumindest eine den Einbauraum (2) begrenzende Begrenzungswand (12, 13) und die Membraneinheit (4) begrenzt ist.

3. Membranbefeuchter nach Anspruch 2, **dadurch gekennzeichnet, dass** die Begrenzungswand (12, 13) und die Membraneinheit (4) jeweils zumindest ein im Wesentlichen kongruent ausgebildetes Labyrinth-Profil (14, 15, 16, 17) aufweisen und dass die Labyrinth-Profile (14, 15, 16, 17) strömungsleitend miteinander in Eingriff sind.

4. Membranbefeuchter nach Anspruch 3, **dadurch gekennzeichnet, dass** die Labyrinth-Profile (14, 15, 16, 17) jeweils eine in Richtung des ersten Luftstroms (L1) ausgebildete Längserstreckung aufweisen und dass die Labyrinth-Profile (14, 15, 16, 17) als ineinandergreifende Nut-Steg-Profile (18, 19, 20, 21) ausgebildet sind, zur Führung der Membraneinheit (4) bei Montage in den Einbauraum (2).

5. Membranbefeuchter nach einem der Ansprüche 3 oder 4, **dadurch gekennzeichnet, dass** die Labyrinth-Profile (14, 15, 16, 17) während der bestimmungsgemäßen Verwendung des Membranbefeuchters von einem Volumenstrom durchströmbar sind, der 1 bis 300 g/s beträgt, gemessen nach DIN EN 24006.

6. Membranbefeuchter nach einem der Ansprüche 1 bis 5, **dadurch gekennzeichnet, dass** die Gehäuseteile (1.1, 1.2) auf ihren einander zugewandten Seiten jeweils einen Gehäuseflansch (22, 23) aufweisen.

7. Membranbefeuchter nach Anspruch 6, **dadurch gekennzeichnet, dass** einer der Gehäuseflansche (22) eine Dichtungsnut (24) aufweist und einer der Gehäuseflansche (23) eine Dichtfläche (25) und dass die Dichtung (10) in der Dichtungsnut (24) und zwischen den Gehäuseflanschen (22, 23) unter elastischer Vorspannung dichtend angeordnet ist.

8. Membranbefeuchter nach Anspruch 7, **dadurch gekennzeichnet, dass** die Dichtung (10) ungehaftet und zerstörungsfrei lösbar in den Dichtungsnut (24) angeordnet ist.
